# EUROPEAN PATENT APPLICATION

(11) **EP 4 635 782 A1**
(43) Date of publication of application: **22.10.2025**
(21) Application number: 25170307.0
(22) Date of filing: 14.04.2025
(51) Int. Cl.: B60L 50/64, C09K 5/06, H01M 10/653, H01M 10/659, H01M 50/505

(54) **HEAT DISSIPATION COMPOSITION AND METHOD OF MANUFACTURING BUSBAR ASSEMBLY USING THE SAME**

(30) Priority: 17.04.2024 KR 20240051152
(71) Applicant: SAMSUNG SDI CO., LTD., Yongin-si, Gyeonggi-do 17084 (KR)
(72) Inventor: YOON, Seok Bin, 16678 Suwon-si (KR); KIM, Jae Seung, 16678 Suwon-si (KR); YOO, Jun Ho, 16678 Suwon-si (KR); LEE, Jeong Min, 16678 Suwon-si (KR); KWAG, No Hyun, 16678 Suwon-si (KR)
(74) Representative: Marks & Clerk LLP

(57) **Abstract**

A heat dissipation composition for busbars is disclosed. The heat dissipation composition includes a base resin and a phase change material, wherein a weight ratio of the base resin to the phase change material is from about 2.8:1 to about 1.3:1. Also disclosed are a method of manufacturing a busbar assembly, and an energy storage device comprising at least one busbar having the heat dissipation composition applied thereto.

## Description

### BACKGROUND

### 1. Field

The present invention relates to a heat dissipation composition for busbars and a method of manufacturing a busbar assembly using the same.

### 2. Description of the Related Art

Recently, with the rapid proliferation of battery-powered electronic devices, such as cellphones, notebook computers, and electric vehicles, the demand for energy-dense, high-capacity secondary batteries has been growing rapidly. As a result, research and development are actively underway to improve the performance of lithium secondary batteries.

Compared to other secondary batteries, such as conventional lead-acid batteries and nickel-cadmium batteries, lithium secondary batteries have higher energy density per unit weight and faster rechargeability, which has led to a rapid increase in their use.

Lithium secondary batteries have an operating voltage of 3.6 V or more and are used as a power source for portable electronic devices. By connecting multiple cells in series or parallel, lithium secondary batteries are also used in high-powered electric vehicles, energy storage devices, and the like.

For long-duration operation or high-power operation, such as in electric vehicles, a battery pack including multiple cells is preferred in terms of power and capacity. The output voltage or output current of the battery pack may be increased depending on the number of cells embedded therein.

Passive propagation resistance (PPR) is a safety feature in battery packs designed to prevent or reduce propagation of heat from one cell to another cell. PPR is essentially required or desired for a battery pack including thousands of battery cells connected to each other and is arranged into a module to prevent or reduce heat propagation to surrounding cells in the event that some cells in the battery pack catch fire.

In the case that a high-power battery module is used to complete a backup in a short time, the temperature of the cells and busbars rises quickly (e.g., very quickly) during discharging of the cells. To prevent or mitigate this, not only PPR, but also a heat dissipation structure for cells and busbars is required or desired, resulting in increased material costs and reduced manufacturing efficiency.

There has been a need to provide a heat dissipation composition to a busbar, which experiences rapid increases in temperature during discharging of battery cells, to prevent or reduce thermal runaway of the battery cells.

This section is intended only to provide a better understanding of the background of the disclosure and thus may include information which is not necessarily prior art.

### SUMMARY

In one aspect, the present invention provides a heat dissipation composition for busbars that has high heat dissipation performance.

In another aspect, the present invention provides a method of manufacturing a busbar assembly using the aforementioned heat dissipation composition.

In a further aspect, the present invention provides an energy storage device that includes a busbar having a heat dissipation layer formed by applying the heat dissipation composition to the busbar.

However, technical aspects and objects to be achieved by the present disclosure are not limited to those described above and other aspects and objects will be clearly understood by those skilled in the art from the detailed description given below, or may be learned by practice of the presented embodiments of the disclosure.

According to a first aspect of the present invention there is provided a heat dissipation composition that includes a base resin and a phase change material, wherein a weight ratio of the base resin to the phase change material is from about 2.8:1 to about 1.3:1.

According to a second aspect of the present invention there is provided a method of manufacturing a busbar assembly that includes the steps of: (i) preparing a heat dissipation composition, especially the aforementioned heat dissipation composition of the first aspect of the invention, by mixing a phase change material with a base resin; (ii) applying the heat dissipation composition to an upper surface of a busbar; and (iii) drying the heat dissipation composition.

According to a third aspect of the present invention there is provided a method of using a heat dissipation composition that includes the step of: spraying or applying the heat dissipation composition, especially the aforementioned heat dissipation composition of the first aspect of the invention, to an object, wherein the object includes a busbar, a battery cell, or a combination thereof.

According to a fourth aspect of the present invention there is provided an energy storage device that includes: a plurality of battery cells; a busbar connected to an electrode lead of at least one of the plurality of battery cells, especially to an electrode lead of at least one of the battery cells of the plurality of battery cells; and a heat dissipation layer disposed on an upper surface of the busbar, wherein the heat dissipation layer is formed from the heat dissipation composition, especially the aforementioned heat dissipation composition of the first aspect of the invention,.

Embodiments of the present disclosure provide a heat dissipation composition that may impart good heat dissipation performance to a busbar if (e.g., when) applied to the busbar, may implement passive propagation resistance (PPR), and may satisfy regulations related to prevention of fire propagation due to thermal runaway of a battery module without requiring a separate fire extinguishing sheet.

Embodiments of the present disclosure provide a heat dissipation composition that may effectively reduce the temperature of a busbar through absorption of heat upon heat generation, thereby eliminating the need to provide a separate heat sink to the busbar.

Embodiments of the present disclosure provide a heat dissipation composition that may have a heat dissipation function and may replace the function of related art fire extinguishing sheets, thereby satisfying regulations related to prevention of fire propagation due to thermal runaway while significantly reducing the manufacturing cost of an energy storage device and reducing the time (e.g., "takt time") of the manufacturing process. Takt time (T) may be defined as the available manufacturing time (Tₘ) divided by customer demand (D): T = Tₘ / D.

However, advantageous or desirable effects of the disclosure are not limited to those described above and other advantageous or desirable effects not mentioned will be clearly understood by those skilled in the art from the detailed description given below.

At least some of the above and other features of the invention are set out in the claims.

### BRIEF DESCRIPTION OF THE DRAWINGS

The accompanying drawings attached to this specification illustrate some embodiments of the present disclosure, and together with the detailed description of the present disclosure, serves to explain aspects and features of the present disclosure. However, the present disclosure should not be construed as being limited to the drawings:
FIG. 1 is a flow diagram of a method of manufacturing a busbar assembly according to one embodiment of the present invention;
FIG. 2 is a plan view illustrating the structure of a busbar disposed on an upper surface of a battery cell;
FIG. 3 is a plan view illustrating an attachment region of a fire extinguishing sheet on an upper surface of the battery cell of FIG. 2;
FIG. 4 is a plan view of a busbar assembly according to one embodiment of the present invention;
FIG. 5 is a schematic perspective view of a battery cell in an energy storage device according to one embodiment of the present invention;
FIG. 6 is a schematic cross-sectional view of the battery cell in the energy storage device of FIG. 5; and
FIG. 7 is a perspective view of a battery module including a busbar assembly for uninterruptible power supply (UPS) modules according to one embodiment of the present disclosure.

### DETAILED DESCRIPTION

Hereinafter, example embodiments of the present disclosure will be described in more detail. However, it should be understood that these embodiments are provided for illustration only and are not to be construed in any way as limiting the present disclosure, and that the scope of the present disclosure is defined by the appended claims and equivalents thereto.

Unless otherwise noted herein, if (e.g., when) an element such as a layer, film, region or substrate is referred to as being placed "on" another element, it can be directly placed on the other element, or intervening layer(s) may also be present.

Herein, the singular forms "a", "an", and "the" are intended to include the plural forms as well, unless the context clearly indicates otherwise. In addition, the term "A or B" may refer to "including A", "including B", or "including A and B", unless otherwise noted herein.

Herein, the term "combination thereof" refers to a mixture, stack, composite, copolymer, alloy, blend, reaction product, or the like of stated components.

Herein, the term "layer" includes not only a feature formed over the entirety of a surface, but also a feature formed on a portion of the surface, in a plan view.

Herein, the term "average particle diameter" may be measured by a suitable method (e.g., well known to those skilled in the art). For example, the average particle diameter may be measured using a particle size analyzer or using transmission electron micrograph (TEM) image or scanning electron micrograph (SEM) images. Alternatively, the average particle diameter may be obtained by measuring the particle size using dynamic light scattering (DLS) and counting the number of particles falling within each particle size range by data analysis, followed by calculation based thereon. The average particle diameter may refer to an average particle diameter D₅₀, which is determined at a cumulative volume percentage of 50% in a particle size distribution.

Herein, the term "or" should not be construed in an exclusive sense. For example, "A or B" should be construed to include A, B, and A+B.

As used herein, to represent a specific numerical range, the expression "X to Y" refers to "greater than or equal to X and less than or equal to Y (X<_ and <_Y)".

In the following embodiments, as an example, a battery cell selected from among prismatic, pouch, and cylindrical cells will be described as having a general structure, and, in the case of technology of general application, the general structure of prismatic/pouch/cylindrical cells will be described.

### Heat dissipation composition

According to the present invention, a heat dissipation composition includes a base resin and a phase change material (PCM).

In an embodiment, the heat dissipation composition may further include a fire extinguishing agent (or capsule) and a flame retardant.

The base resin may form a polymer matrix, and the phase change material and the fire extinguishing agent may be contained (e.g., dispersed) in the polymer matrix.

The base resin may be directly applied to a source of heat generation (e.g., a heat source or a member that generates heat) and then cured to be firmly attached thereto.

The base resin may include a polyurethane resin, a silicone resin, or a combination thereof.

The base resin according to embodiments of the disclosure may form a matrix to contain the phase change material and the fire extinguishing agent in the matrix. It may also have a suitable viscosity before curing to allow even (e.g., uniform) application of the heat dissipation composition, thereby ensuring good processability. In addition, the base resin may have suitable heat resistance to avoid deformation under continuous exposure to heat, and may dissipate a portion of the heat transferred from a source of heat generation to the outside.

The base resin according to embodiments of the disclosure may be easy to apply to a source of heat generation due to high or suitable viscosity before curing. In addition, the base resin according to embodiments of the disclosure may be a thermally curable resin, and thus may be cross-linked and cured by a catalyst and/or heat after application (e.g., deposition) of the heat dissipation composition to a surface of a source of heat generation, thereby allowing the phase change material and the fire extinguishing capsule to be securely contained therein.

A weight ratio of the base resin to the phase change material ranges from about 2.8:1 to about 1.3:1 (for example, the weight ratio of the base resin to the phase change material may be 2.8:1, 2.7:1, 2.6:1, 2.5:1, 2.4:1, 2.3:1, 2.2:1, 2.1:1, 2.0:1, 1.9:1, 1.8:1, 1.7:1, 1.6:1, 1.5:1, 1.4:1, or 1.3:1).

Within this range of weight ratio of the base resin to the phase change material, the heat dissipation composition may provide better temperature reduction effects than related art heat dissipation sheets.

In one embodiment, the base resin may be present in an amount of about 50 parts by weight to about 70 parts by weight (for example, the base resin may be present in an amount of 50, 51, 52, 53, 54, 55, 56, 57, 58, 59, 60, 61, 62, 63, 64, 65, 66, 67, 68, 69, or 70 parts by weight), based on 100 parts by weight of the heat dissipation composition.

Within this range of content (e.g., amount) of the base resin, the heat dissipation composition may have a suitable viscosity and thus may be easy to evenly apply to a surface of a source of heat generation prior to curing while reducing the manufacturing costs of the heat dissipation composition. That is, by including the base resin at about 50 parts by weight to about 70 parts by weight, the heat dissipation composition may have a suitable viscosity to allow it to be easily and uniformly dispensed on a surface of a heat source prior to curing and may be manufactured at a reduced cost.

The phase change material may be a substance used to store energy and/or maintain a constant temperature through absorption or release of latent heat (e.g., during a phase change) by the substance. Here, the term "latent heat" refers to heat absorbed or released by a substance during a phase change thereof, such as from solid to liquid, liquid to solid, liquid to gas, or gas to liquid, without changing the temperature thereof. Latent heat is larger (e.g., much larger) than "sensible heat", which is the heat that causes a change in the temperature of a substance without undergoing a phase change.

The temperature of the phase change material may be gradually increased if (e.g., when) the temperature of the surroundings is increased by heat generated from a source of heat generation, and may be gradually decreased if (e.g., when) the temperature of the surroundings is decreased (e.g., lowered). For example, if (e.g., when) the phase change material has its own phase change temperature (T_{PC}), or if (e.g., when) the phase change material is made to memorize a set or predetermined (e.g., specific) temperature, the phase change material can increase or decrease the temperature of the surroundings by releasing or absorbing heat while undergoing a phase change if (e.g., when) the corresponding temperature is reached. If (e.g., when) moved from a cold place to a hot place, the phase change material may provide heat dissipation by drawing heat away from the surroundings and cooling the surroundings while undergoing a phase change from solid to liquid. Conversely, if (e.g., when) moved from a hot place to a cold place, the phase change material may increase the temperature of the surroundings by releasing heat to the surroundings while undergoing a phase change from liquid to solid.

In one embodiment, the phase change material may include at least one of an organic phase change material (e.g., a paraffin-based organic phase change material), an inorganic phase change material, and/or a eutectic phase change material.

For example, the organic phase change material may include at least one of Paraffin C16-C19 (e.g., C16-C19 alkanes), Polyglycol E600 (e.g., polyethylene glycol with an average molecular weight of 600), paraffin wax, Paraffin C16-C28 (e.g., C16-C28 alkanes), Paraffin C20-C33 (e.g., C20-C33 alkanes), Paraffin C13-C24 (e.g., C13-C24 alkanes), 1-dodecanol, 1-tetradecanol, Paraffin C18 (e.g., C18 alkanes), or vinyl stearate.

The inorganic phase change material may include at least one of CaCl₂·6H₂O, Zn(NO₃)₂·6H₂O, KF·4H₂O, Na₂S₂O₃·5H₂O, Na₂SO₄·10H₂O, Mn(NO₃)₂·6H2O, LiNO₃·3H₂O, or Na(CH₃COO)·3H₂O.

The eutectic phase change material may include at least one of about 47% of Ca(NO₃)₂·4H₂O + about 33% of Mg(NO₃)₂·6H₂O (i.e., a mixture of about 47% of Ca(NO₃)₂·4H₂O and about 33% of Mg(NO₃)₂·6H₂O), about 37.5% of urea + about 63.5% of acetamide (i.e., a mixture of about 37.5% of urea and about 63.5% of acetamide), about 48% of CaCl₂ + about 4.3% of NaCl + about 0.4% of KCI + about 47.3% of H₂O (i.e., a mixture of about 48% of CaCl₂, about 4.3% of NaCl, about 0.4% of KCI and about 47.3% of H₂O), about 66.6% of CaCl₂·6H₂O + about 33.3% of MgCl₂·6H₂O (i.e., a mixture of about 66.6% of CaCl₂·6H₂O and about 33.3% of MgCl₂·6H₂O), about 60% of Na(CH₃COO)·3H₂O + about 40% of CO(NH₂) (i.e., a mixture of about 60% of Na(CH₃COO)·3H₂O and about 40% of CO(NH₂)), about 61.5% of Mg(NO₃)₂·6H₂0 + about 38.5% of NH₄NO₃ (i.e., a mixture of about 61.5% of Mg(NO₃)₂·6H₂O and about 38.5% of NH₄NO₃), about 58.7% of Mg(NO₃)·6H₂O + about 41.3% of MgCl₂·6H₂O (i.e., a mixture of about 58.7% of Mg(NO₃)·6H₂O and about 41.3% of MgCl₂·6H₂O), or about 67.1% of naphthalene + about 32.9% of benzoic acid (i.e., a mixture of about 67.1% of naphthalene and about 32.9% of benzoic acid).

The phase change material may be present in the form of microcapsules in the matrix of the base resin. In one or more embodiments, the phase change material may have an average particle diameter of about 100 µm or less (for example, the phase change material may have an average particle diameter of 100 µm, 99 µm, 98 µm, 97 µm, 96 µm, 95 µm, 94 µm, 93 µm, 92 µm, 91 µm, 90 µm, 89 µm, 88 µm, 87 µm, 86 µm, 85 µm, 84 µm, 83 µm, 82 µm, 81 µm, 80 µm, 79 µm, 78 µm, 77 µm, 76 µm, 75 µm, 74 µm, 73 µm, 72 µm, 71 µm, 70 µm, 69 µm, 68 µm, 67 µm, 66 µm, 65 µm, 64 µm, 63 µm, 62 µm, 61 µm, 60 µm, 59 µm, 58 µm, 57 µm, 56 µm, 55 µm, 54 µm, 53 µm, 52 µm, 51 µm, 50 µm, 49 µm, 48 µm, 47 µm, 46 µm, 45 µm, 44 µm, 43 µm, 42 µm, 41 µm, 40 µm, 39, µm, 38 µm, 37 µm, 36 µm, 35 µm, 34 µm, 33 µm, 32 µm, 31 µm, 30 µm, 29 µm, 28 µm, 27 µm, 26 µm, 25 µm, 24 µm, 23 µm, 22 µm, 21 µm, 20 µm, 19 µm, 18 µm, 17 µm, 16 µm, 15 µm, 14 µm, 13 µm, 12 µm, 11 µm, 10 µm, 9 µm, 8 µm, 7 µm, 6 µm, 5 µm, 4 µm, 3 µm, 2 µm, or 1 µm). In an embodiment, the phase change material may have an average particle diameter of about 1.5 µm to about 90 µm.

The phase change material may be present in the form of capsules in the base resin matrix. For example, the phase change material may be encapsulated to form the capsules. The encapsulation method may include encapsulation using a coacervation reaction of gelatin with arabic rubber, encapsulation using coco fatty acid and a phase change material, encapsulation using n-hexadecane and poly(methyl methacrylate) (PMMA), encapsulation of polyethylene glycol (PEG) with an acrylic polymer, or encapsulation using polyvinyl acetate and tetradecane.

Encapsulation of the phase change material may facilitate uniform dispersion of the phase change material in the base resin, improve mechanical properties of the heat dissipation composition after application of the heat dissipation composition to a surface of a source of heat generation, and make it easier to control the phase change temperature of the phase change material.

In addition, encapsulation of the phase change material may be desirable in that the phase change material may be easily mixed with the base resin, as compared to if (e.g., when) the phase change material is directly impregnated into the base resin or if (e.g., when) a shape-stabilized phase change material is used as the phase change material.

The phase change material may have a phase change temperature of about 35 °C to about 45 °C (for example, the phase change temperature may be 35 °C, 36 °C, 37 °C, 38 °C, 39 °C, 40 °C, 41 °C, 42 °C, 43 °C, 44 °C, or 45 °C).

The heat dissipation composition may be applied to a busbar of a battery. The operating temperature of a battery cell may be typically maintained in the range of about 20 °C to about 26 °C. If (e.g., when) the temperature of the battery cell increases and exceeds the above range due to high power output, the phase change material may take heat away from the battery cell, thereby cooling not only the busbar but also the surrounding battery cells.

The phase change temperature requirement may be satisfied by appropriately selecting the type or kind of phase change material used. For example, a paraffin-based phase change material, such as Paraffin C16-C19 (C₁₉H₄₀, C₁₈H₃₈, C₁₆H₃₄) having a melting point of about 18 °C to about 33 °C, may be selected to provide the phase change temperature within this range.

The phase change material may be present in an amount of about 20 parts by weight to about 40 parts by weight (for example, the phase change material may be present in an amount of 20, 21, 22, 23, 24, 25, 26, 27, 28, 29, 30, 31, 32, 33, 34, 35, 36, 37, 38, 39, or 40 parts by weight), based on 100 parts by weight of the heat dissipation composition.

Within this range, the phase change material may provide sufficient heat dissipation upon contact with a source of heat generation by absorbing the latent heat, allowing control of the temperature both in a region to which the heat dissipation composition is applied, as well as in the surrounding regions. For example, if (e.g., when) the heat dissipation composition is applied to a surface of a busbar, the phase change material may prevent or reduce a rapid increase in temperature during high-power charging/discharging of a battery cell. In addition, because the phase change material may have high (e.g., very high) viscosity, within this range of content of the phase change material, the viscosity of the heat dissipation composition may be adjusted to a level that allows even (e.g., uniform) application of the heat dissipation composition using spray coating, a brush, or the like. Further, because the phase change material may be flammable, within this range of content of the phase change material, combustion of the phase change material may be prevented or reduced through addition of the flame retardant. Moreover, within this range of content of the phase change material, the heat dissipation composition may have a flame retardancy of V-2 in accordance with the UL94 safety standard released by Underwriters Laboratories of the United States through the addition of the flame retardant while ensuring reduction in time (e.g., takt time) in the manufacturing processes.

The fire extinguishing agent may impart a self-extinguishing function to the heat dissipation composition. In an embodiment, the fire extinguishing agent may be contained in a fire extinguishing capsule. If (e.g., when) the heat dissipation composition reaches a target temperature due to thermal runaway of a battery cell, which is a source of heat generation, the fire extinguishing agent contained in the fire extinguishing capsule may be sprayed (e.g., dispersed) to prevent or reduce combustion of a battery module.

The fire extinguishing agent may be present in the form of microcapsules in the base resin matrix. For example, the fire extinguishing agent may be a micro-sized fire extinguishing capsule having an average diameter of about 10 µm to about 80 µm (for example, the average diameter of the first extinguishing capsule may be 10 µm, 20 µm, 30 µm, 40 µm, 50 µm, 60 µm, 70 µm, or 80 µm). In an embodiment, the micro-sized fire extinguishing capsule may have an average diameter of about 10 µm to about 50 µm.

The fire extinguishing agent in the form of microcapsules may be evenly dispersed in the matrix of the base resin, ensure improved manufacturing efficiency, and may also spread evenly (e.g., uniformly or very evenly) upon generation of heat above the reaction temperature thereof from a source of heat generation, thereby ensuring more effective suppression of fire in a battery cell.

The fire extinguishing agent may have a reaction temperature of about 140 °C to about 180 °C (for example, the reaction temperature may be 140 °C, 150 °C, 160 °C, 170 °C, or 180 °C).

The heat dissipation composition may be directly applied to, for example, a surface of a busbar. Because thermal runaway due to increase in temperature of a battery cell generally may begin to occur at about 200 °C, within this range of reaction temperature of the fire extinguishing agent, the fire extinguishing agent in the fire extinguishing capsule may reach the reaction temperature thereof before ignition of the battery cell, and may be sprayed (e.g., dispersed) into the battery cell in advance (e.g., prior to the occurrence of thermal runaway) to effectively suppress initial combustion of the battery cell, thereby preventing or reducing spread of a fire and thermal runaway of the battery cell. If the reaction temperature of the fire extinguishing agent is less than the above range, the fire extinguishing agent may be activated (e.g., prematurely) by dissolution of the fire extinguishing capsule before ignition of the battery cell and thus may not be used if (e.g., when) a fire actually occurs in the battery cell.

In one embodiment, the fire extinguishing capsule may include a perfluoro group-containing compound.

The perfluoro group-containing compound may have, for example, a molecular structure of 2-methyl-3-pentanone, and may be a highly effective gaseous fire extinguishing agent. The fire extinguishing capsule may be in the form of a capsule having a core formed of the fire extinguishing agent and a shell including gelatin, formalin, and/or a polymer binder around the core.

As the perfluoro group-containing compound may be contained as a fire extinguishing agent in the fire extinguishing capsule having a shell including gelatin, the fire extinguishing agent may avoid reaction with the base resin while maintaining the fire extinguishing capacity, and, if (e.g., when) the reaction temperature is reached, the fire extinguishing agent may be sprayed (e.g., dispersed) quickly (e.g., immediately) by dissolution of the fire extinguishing capsule such that a battery cell is filled with the fire extinguishing agent before combustion occurs.

The fire extinguishing agent may be present in an amount of about 1 part by weight to about 10 parts by weight (for example, the fire extinguishing agent may be present in an amount of 1, 2, 3, 4, 5, 6, 7, 8, 9, or 10 parts by weight), based on 100 parts by weight of the heat dissipation composition.

Within this range of content of the fire extinguishing agent, the heat dissipation composition may satisfy requirements related to prevention of fire propagation due to thermal runaway, extinguish not only a fire of a busbar but also a fire of a battery cell around a busbar assembly, and minimize or reduce manufacturing costs without sacrificing performance standards.

The flame retardant may suppress combustion of the phase change material.

Because the phase change material may be flammable, the flame retardant may be used to suppress combustion of the phase change material in the heat dissipation composition applied to a source of heat generation.

The flame retardant may include a phosphorus flame retardant, a non-halogen flame retardant, or a combination thereof. The phosphorus flame retardant may include, for example, an organophosphorus compound, an organophosphate compound, or a mixture thereof. The organophosphorus compound may include, for example, red phosphorus, phosphoric acid, melamine orthophosphate, melamine pyrophosphate, melamine polyphosphate, melamine phosphate, and/or the like, and the organophosphate compound may include, for example, piperazine orthophosphate, piperazine pyrophosphate, piperazine polyphosphate, and/or the like. In an embodiment, the phosphorus flame retardant may be a red phosphorus flame retardant.

The non-halogen flame retardant may include, for example, a phosphate ester flame retardant, ammonium polyphosphate, red phosphorus, magnesium hydroxide, aluminum hydroxide, expanded graphite, and/or the like. For example, the phosphate ester flame retardant may include at least one of triphenyl phosphate (TPP), tricresyl phosphate (TCP), trixylenyl phosphate (TXP), tris(isopropylphenyl)phosphate, tris(o- or p-phenylphenyl)phosphate, trinaphthyl phosphate, cresyl diphenyl phosphate (CDP), xylenyl diphenyl phosphate, diphenyl(2-ethylhexyl)phosphate, di(isopropylphenyl)phenyl phosphate, o-phenylphenyl dicresyl phosphate, tris(2,6-dimethylphenyl)phosphate (TDMPP), tetraphenyl m-phenylene diphosphate, tetraphenyl p-phenylene diphosphate, phenyl resorcinol-polyphosphate, bisphenol A-bis(diphenyl phosphate), bisphenol A-poly(phenyl phosphate), or dipyrocatechol hypodiphosphate.

The flame retardant may be present in an amount of about 1 part by weight to about 10 parts by weight (for example, the flame retardant may be present in an amount of 1, 2, 3, 4, 5, 6, 7, 8, 9, or 10 parts by weight), based on 100 parts by weight of the heat dissipation composition.

The flame retardant according to embodiments of the disclosure may effectively suppress combustion of the phase change material and may not affect viscosity of the heat dissipation composition due to high compatibility with the base resin, thereby ensuring easy application of the heat dissipation composition.

The flame retardant may have a flame retardancy of V-2, as measured in accordance with the UL94 safety standard released by Underwriters Laboratories of the United States.

With the flame retardant, the heat dissipation composition may be prevented or substantially prevented from being directly burned by flames from a fire of a battery cell, as well as having self-extinguishing properties.

The heat dissipation composition may have a latent heat value of about 40 kJ/kg or more if (e.g., when) potted into a busbar.

The heat dissipation composition may be applied to a surface of a busbar to be potted into a busbar assembly.

The heat dissipation composition may have a latent heat value of about 40 kJ/kg or more, in an embodiment, about 40 kJ/kg to about 60 kJ/kg (for example, the latent heat value may be 40 kJ/kg, 41 kJ/kg, 42 kJ/kg, 43 kJ/kg, 44 kJ/kg, 45 kJ/kg, 46 kJ/kg, 47 kJ/kg, 48 kJ/kg, 49 kJ/kg, 50 kJ/kg, 51 kJ/kg, 52 kJ/kg, 53 kJ/kg, 54 kJ/kg, 55 kJ/kg, 56 kJ/kg, 57 kJ/kg, 58 kJ/kg, 59 kJ/kg, or 60 kJ/kg).

Within these ranges of the latent heat value, the heat dissipation composition may sufficiently absorb heat transferred to a busbar connected to battery lead terminals upon increase in temperature of a battery cell due to high power output, thereby preventing or substantially preventing the busbar from being heated up, and may aid in cooling the battery cell by drawing heat away from the battery cell.

The heat dissipation composition according to the present disclosure may be directly potted into a busbar to form a busbar assembly. The heat dissipation composition may control an increase in temperature of the busbar depending on power output characteristics of a battery cell while cooling the battery cell, and may extinguish an initial fire of the battery cell by setting a temperature range within which the fire extinguishing agent reacts to be higher than the phase change temperature of the phase change material to ensure even spread (e.g., uniform dispersion) of the fire extinguishing agent in the battery cell upon combustion of the battery cell, and may prevent or reduce thermal runaway of the battery cell, thereby implementing (or enabling) passive propagation resistance (PPR).

### Usage of heat dissipation composition

The heat dissipation composition described herein is sprayed or applied to an object requiring heat dissipation to transfer heat from a source of heat generation to the heat dissipation composition, thereby securing heat dissipation performance. The object is a busbar, a battery cell, or both.

### Manufacture of busbar assembly

The third aspect of the present invention relates to a busbar assembly manufacturing method.

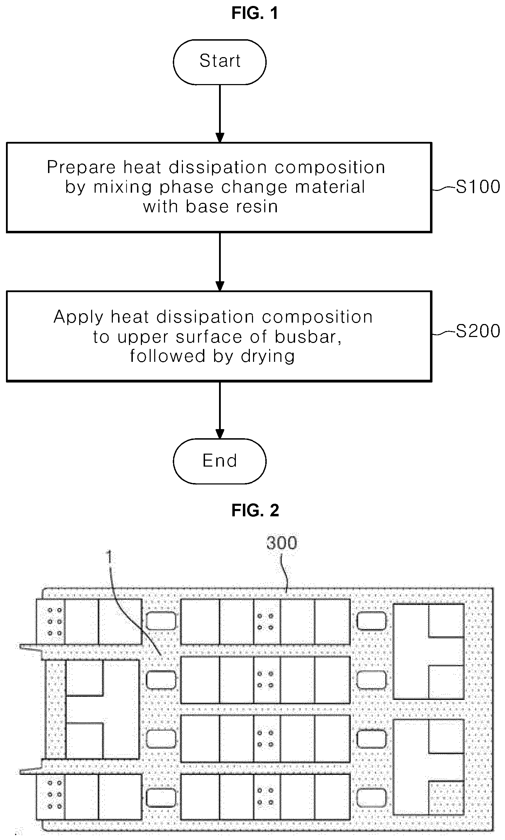

FIG. 1 is a flow diagram of a busbar assembly manufacturing method according to one embodiment of the present invention.

Referring to FIG. 1, the busbar assembly manufacturing method includes: preparing a heat dissipation composition by mixing a phase change material with a base resin; and applying the heat dissipation composition to an upper surface of a busbar, followed by drying the heat dissipation composition.

First, a heat dissipation composition is prepared by mixing a phase change material with a base resin (S100).

In one embodiment, the heat dissipation composition may be prepared by further adding a fire extinguishing agent and a flame retardant to the base resin, followed by mixing.

Because the heat dissipation composition is the same as the heat dissipation composition described above, repeated description will not be provided.

The heat dissipation composition may include about 50 parts by weight to about 70 parts by weight of the base resin, about 20 parts by weight to about 40 parts by weight of the phase change material, about 1 part by weight to about 10 parts by weight of the fire extinguishing agent, and about 1 part by weight to about 10 parts by weight of the flame retardant, based on 100 parts by weight of the heat dissipation composition.

Within these ranges of content of the aforementioned components, the heat dissipation composition may be prepared by adding the phase change material, the fire extinguishing agent, and the flame retardant to the base resin, followed by stirring (e.g., mixing).

The heat dissipation composition prepared as above may have a suitable viscosity to be directly applied to a busbar and may be potted into the busbar to form a busbar assembly.

The heat dissipation composition is applied, for example directly applied, to an upper surface of the busbar, followed by drying (S200) of the composition.

The heat dissipation composition may be directly potted into the surface of the busbar by application (e.g., deposition) or the like. Alternatively, the heat dissipation composition may be potted into the busbar by preparing a heat dissipation sheet corresponding in shape to the busbar from the heat dissipation composition, applying a primer to the surface of the busbar, and attaching the heat dissipation sheet to the primer. However, because the heat dissipation composition may be viscous (e.g., it may have a suitable viscosity to be dispensed directly on the busbar) and may not react with the busbar formed of a metal, drying and curing of the heat dissipation composition after application of the heat dissipation composition directly on the busbar may be preferred to reduce takt time in the manufacturing processes.

In one embodiment, the heat dissipation composition may be applied to a region of the upper surface of the busbar to which a fire extinguishing sheet may be attached. That is, a fire extinguishing sheet may be attached to a region of the upper surface of the busbar, and the heat dissipation composition may be applied to the fire extinguishing sheet on the upper surface of the busbar.

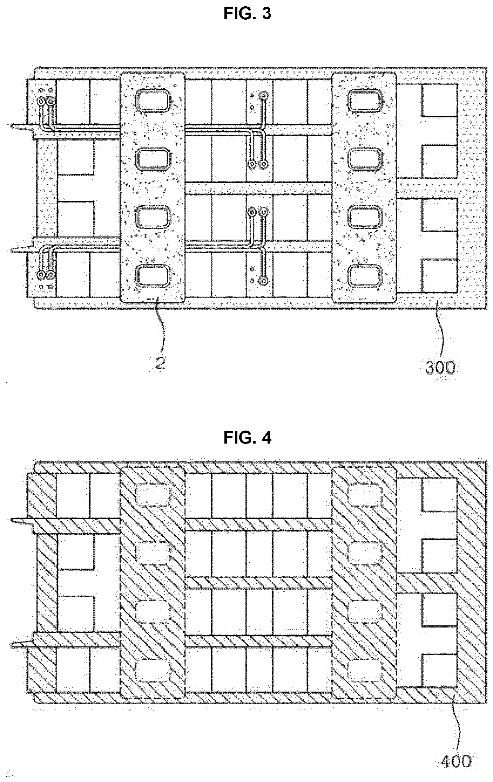

FIG. 2 is a plan view illustrating a structure of a busbar disposed on an upper surface of a battery cell, FIG. 3 is a plan view illustrating an attachment region of a fire extinguishing sheet on the upper surface of the battery cell of FIG. 2, and FIG. 4 is a plan view of a busbar assembly according to one embodiment of the present disclosure.

Referring to FIG. 2 to FIG. 4, a busbar 300 may include transverse and longitudinal members electrically connecting cells to each other and may include a grid region 1 formed by intersection of the transverse and longitudinal members. A fire extinguishing sheet 2 may be attached to the grid region. The heat dissipation composition may be applied to a surface of the busbar 300, including the grid region 1, to form a heat dissipation layer 400. With the fire extinguishing agent contained therein, the heat dissipation layer 400 can replace the function of related art fire extinguishing sheets in the event of a fire of a battery cell, thereby ensuring reduction in manufacturing costs and shortening of manufacturing processes.

In one embodiment, the heat dissipation composition may be applied to the surface of the busbar 300 to a thickness of about 1 mm or more, for example, about 16 mm or more. In an embodiment, the heat dissipation composition may be applied to the surface of the busbar 300 to a thickness of about 16 mm to about 25 mm (for example, the thickness of the heat dissipation composition may be 16 mm, 17 mm, 18 mm, 19 mm, 20 mm, 21 mm, 22 mm, 23 mm, 24 mm, or 25 mm), preferably about 16 mm to about 20 mm, or about 16 mm.

Within these ranges, the heat dissipation layer 400 including the heat dissipation composition may be solidly formed, thus making the busbar assembly more reliable. If the application thickness of the heat dissipation composition exceeds these ranges, the resulting heat dissipation layer can may affect the structures of a cooling channel and a battery module case.

If (e.g., when) the heat dissipation composition is applied to the busbar 300, a maximum temperature of the busbar 300 upon heat generation may be reduced by about 20 °C or more, as compared to if (e.g., when) the heat dissipation composition is not applied to the busbar 300. For example, during initial operation of a battery cell at a high power output level, the temperature of the busbar 300 without the heat dissipation layer 400 may be increased to about 114 °C or more, whereas, the busbar assembly including the heat dissipation layer 400 formed of the heat dissipation composition may reduce the maximum temperature of the busbar 300 to 95 °C or less.

In one embodiment, the heat dissipation composition may have a latent heat value of about 40 kJ/kg or more, for example, about 40 kJ/kg to about 60 kJ/kg (for example, the latent heat value may be 40 kJ/kg, 41 kJ/kg, 42 kJ/kg, 43 kJ/kg, 44 kJ/kg, 45 kJ/kg, 46 kJ/kg, 47 kJ/kg, 48 kJ/kg, 49 kJ/kg, 50 kJ/kg, 51 kJ/kg, 52 kJ/kg, 53 kJ/kg, 54 kJ/kg, 55 kJ/kg, 56 kJ/kg, 57 kJ/kg, 58 kJ/kg, 59 kJ/kg, or 60 kJ/kg), or about 40 kJ/kg.

If (e.g., when) the heat dissipation composition is applied to the surface of the busbar 300 to a thickness of about 16 mm or more and is cured to form the heat dissipation layer 400, the latent heat of the heat dissipation layer 400 may be increased to the above range by the phase change material contained therein, thereby preventing or reducing the increase in temperature of the busbar 300 as well as cooling surrounding battery cells by drawing heat away from the battery cells.

In one embodiment, the fire extinguishing agent may have a reaction temperature of about 140 °C to about 180 °C (for example, the reaction temperature may be 140 °C, 150 °C, 160 °C, 170 °C, or 180 °C). The fire extinguishing agent may be a micro-sized fire extinguishing capsule. In one embodiment, the fire extinguishing capsule may contain a perfluoro group-containing compound in a core thereof, and the reaction temperature of the fire extinguishing agent may be controlled by adjusting the content (e.g., amount) of the perfluoro group-containing compound and the thickness of a shell of the fire extinguishing capsule. Within this range of reaction temperature of the fire extinguishing agent, the fire extinguishing agent may spread into battery cells around the busbar assembly at a temperature lower than about 200 °C, at which the battery cells begin to ignite during actual operation, thereby ensuring effective extinguishment of an initial fire caused by overheating of the battery cells while preventing or substantially preventing successive ignition of the battery cells. If the reaction temperature of the fire extinguishing agent is less than this range, the fire extinguishing agent may be activated before a fire occurs in the battery cells, resulting in failure to extinguish the fire at the time the fire is ignited.

### Energy storage device

A fourth aspect of the present invention relates to an energy storage device.

The energy storage device includes a plurality of battery cells, a busbar, and a heat dissipation layer.

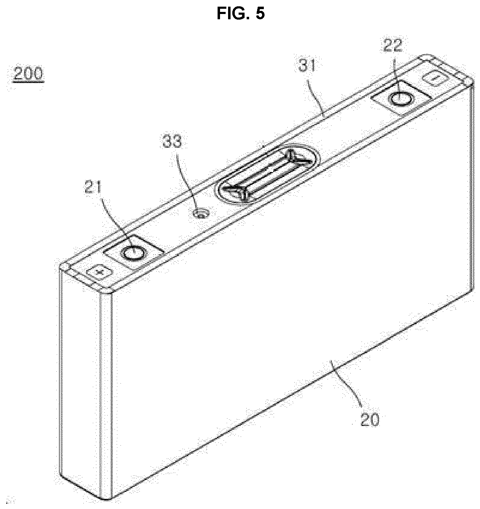

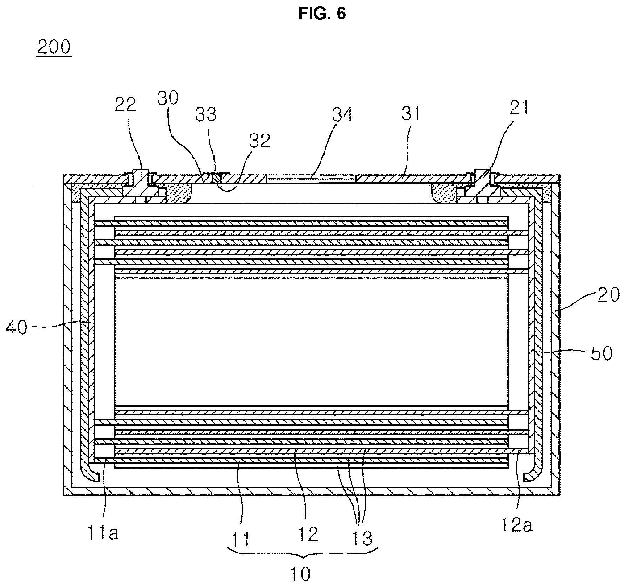

FIG. 5 is a schematic perspective view of a battery cell in an energy storage device according to one embodiment of the present invention, and FIG. 6 is a schematic cross-sectional view of the battery cell of FIG. 5.

Referring to FIG. 5 and FIG. 6, a battery cell 200 may include: at least one electrode assembly 10 formed by winding a positive electrode 11 and a negative electrode 12 with an insulator as a separator 13 interposed therebetween; a case 20 for receiving the electrode assembly 10 therein; and a cap assembly 30 coupled to an opening of the case 20.

In the following description, the battery cell 200 will be described using a prismatic lithium-ion secondary cell as an example. However, it should be understood that the present disclosure is not limited thereto and the battery cell 200 may be a lithium polymer battery or a cylindrical battery.

Each of the positive electrode 11 and the negative electrode 12 may include: a coated portion in which an active material is applied to a current collector formed of a sheet (e.g., thin sheet) of metal foil; and an uncoated portion 11a or 12a, in which no active material is present.

The electrode assembly 10 may be formed by winding the positive electrode 11 and the negative electrode 12 with the insulator as the separator 13 interposed therebetween. However, it should be understood that the present disclosure is not limited thereto and the electrode assembly 10 may have a structure in which a plurality of sheets of the positive electrode and a plurality of sheets of the negative electrode are alternately stacked with the separator interposed therebetween.

The case 20 defines the overall external appearance of the battery cell 200 and may be formed of a conductive metal such as aluminum, an aluminum alloy, or nickel-plated steel. In addition, the case 20 may provide a space for receiving the electrode assembly 10 therein.

The cap assembly 30 may include a cap plate 31 covering the opening of the case 20, wherein the case 20 and the cap plate 31 may be formed of a conductive material. Here, a positive electrode terminal 21 and a negative electrode terminal 22 electrically connected to the positive electrode 11 or the negative electrode 12 may protrude outward through the cap plate 31.

In addition, an upper post of each of the positive electrode terminal 21 and the negative electrode terminal 22 protruding outwardly of the cap plate 31 may have a threaded outer circumferential surface to be secured to the cap plate 31 using a nut.

However, it should be understood that the present disclosure is not limited thereto and the positive electrode terminal 21 and the negative electrode terminal 22 may be riveted or welded to the cap plate 31.

In addition, the cap plate 31 may be provided in the form of a thin plate to be coupled to the opening of the case 20. Here, the cap plate 31 may include an electrolyte inlet 32, in or on which a sealing plug 33 may be installed, and a vent 34 having a notch 34a formed therein.

The vent 34 may be opened or closed in response to changes in the internal pressure of the case 20. That is, the vent 34 may remain closed during normal operation of the electrode assembly 10 to keep the case 20 sealed. In addition, upon an increase in internal pressure of the case 20 to a predetermined level or higher due to overcharging or a fire, the vent 34 may be opened to discharge emissions, such as flames, gases, and/or the like, from the interior of the case 20 to the exterior of the case 20.

The positive electrode terminal 21 and the negative electrode terminal 22 may be electrically connected to a current collector including a first current collector 40 and a second collector 50 (hereinafter referred to as a "positive electrode current collector" and a "negative electrode current collector", respectively) welded to the uncoated portion 11a of the positive electrode or the uncoated portion 12a of the negative electrode.

For example, the positive electrode terminal 21 and the negative electrode terminal 22 may be welded to the positive electrode current collector 40 and the negative electrode current collector 50, respectively. However, it should be understood that the present disclosure is not limited thereto and the positive electrode terminal 21 and the negative electrode terminal 22 may be integrally formed with the positive electrode current collector 40 and the negative electrode current collector 50, respectively.

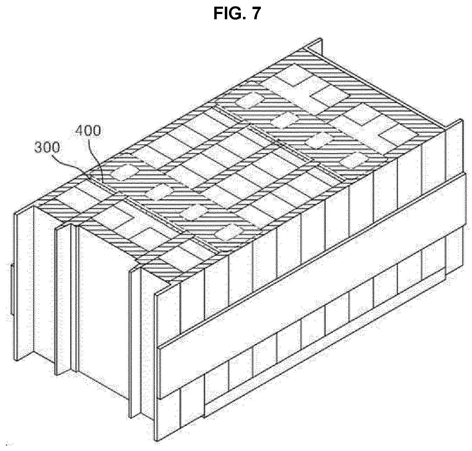

FIG. 7 is a perspective view of a battery module including a busbar assembly according to one embodiment of the present disclosure.

Referring to FIG. 7, a busbar 300 is connected at one end thereof to an electrode lead of the battery cell. Here, the busbar 300 is connected to at least one battery cell to form a busbar assembly.

The heat dissipation layer 400 is formed by applying the heat dissipation composition to a surface of the busbar 300 and serves to control the increase in temperature of the busbar 300.

Due to the heat dissipation layer 400 provided to prevent or reduce rise in temperature of the busbar 300, the busbar 300 does not require a separate heat sink or heat storage structure, thereby significantly simplifying the structure of the busbar assembly.

The busbar assembly includes the heat dissipation layer 400. Because a temperature range within which the heat dissipation layer 400 suppresses the rise in temperature of the busbar 300 is set differently from a reaction temperature range within which the fire extinguishing agent contained in the heat dissipation layer 400 is sprayed before ignition of the battery cell, the heat dissipation layer 400 may suppress the rapid rise in temperature of the busbar due to high power output during initial operation of a battery, thereby improving operational stability of the busbar 300, as well as highly effectively extinguish an initial fire of the battery cell 200 by allowing the fire extinguishing agent to be sprayed upon combustion of the battery cell 20 as the temperature transmitted to the busbar 300 due to the increase in temperature of the battery cell 200 reaches the reaction temperature range, and may prevent or reduce thermal runaway of the battery cell 200, thereby implementing passive propagation resistance (PPR). That is, a temperature range within which the heat dissipation layer 400 may use the latent heat to suppress the rise in temperature of the busbar 300 is set to be lower than a reaction temperature range within which the fire extinguishing agent contained in the heat dissipation layer 400 may be dispersed to the battery cells. As such, the heat dissipation layer 400 may suppress the rapid rise in temperature of the busbar due to high power output during initial operation of a battery, thereby improving operational stability of the busbar 300, as well as effectively extinguish an initial fire of the battery cell 200 by allowing the fire extinguishing agent to be dispersed upon combustion of the battery cell 200. Accordingly, the heat dissipation layer 400 may prevent or reduce thermal runaway of the battery cell 200, thereby implementing passive propagation resistance (PPR).

According to one or more embodiments of the present disclosure, an uninterruptible power supply device capable of satisfying regulations related to prevention of fire propagation due to thermal runaway is provided.

Next, the present disclosure will be described in more detail with reference to some examples. However, it should be noted that these examples are provided for illustration only and are not to be construed in any way as limiting the disclosure.

### Examples 1 to 3

In Example 1, a heat dissipation composition was prepared by mixing a polyurethane resin with a phase change material (KCC Corp.) in a content ratio shown in Table 1, followed by adding a fire extinguishing agent and a flame retardant. In Example 2, a heat dissipation composition was prepared by mixing a polyurethane resin with a phase change material (KCC Corp.) in a content ratio shown in Table 1 without adding any fire extinguishing agent or flame retardant. In Example 3, a heat dissipation composition was prepared by mixing a polyurethane resin with a phase change material (KCC Corp.) in a content ratio shown in Table 1. Each of the prepared heat dissipation compositions was applied to a thickness of 16 mm to a surface of a busbar (specific heat: 0.893 J/g°C, mass: 83.9 g), followed by drying, thereby forming a heat dissipation layer.

### Comparative Example 1

A heat dissipation layer was not formed on the same busbar as in Examples.

### Comparative Example 2

A heat dissipation layer was formed by applying heat dissipation silicone to the same busbar as in Examples to the same thickness as in Examples.

**Table 1**

| Sample | Base resin | Content of base resin (parts by weight) | Content of phase change material (parts by weight) | Content of fire extinguishing agent (parts by weight) | Content of flame retardant (parts by weight) | Maximum temperature of busbar (°C) |
|---|---|---|---|---|---|---|
| Example 1 | Polyurethane | 62 | 23 | 5 | 10 | 91.2 |
| Example 2 | Polyurethane | 60 to 70 | 30 to 40 | - | - | 92.03 |
| Example 3 | Polyurethane | 60 to 70 | 30 to 40 | - | - | 94.63 |
| Compara tive Example 1 | - | - | - | - | - | 114.28 |
| Compara tive Example 2 | Heat dissipation silicone | 75 to 80 | 20 to 25 | - | - | 103.6 |

### Experimental Example

The busbar had a length of 1 m and a suitable thickness (e.g., adjusted according to the standards for busbar manufacturing) and was bolted at both ends thereof. Each of the heat dissipation compositions prepared in the Examples and Comparative Examples was applied to a center of the busbar to form a heat dissipation layer, followed by placing a thermostat on the heat dissipation layer to measure the temperature change of the busbar.

Table 1 shows measurement results of a maximum temperature of the busbar after formation of a heat dissipation layer on the busbar through application of each of the heat dissipation compositions prepared in the Examples and Comparative Examples. After 50 g of a sample was taken from each heat dissipation composition and then potted into the busbar, a current of 600 A was applied to the busbar at room temperature for 7 minutes, followed by measurement of the maximum temperature of the busbar.

Referring to Table 1, it can be seen that the maximum temperature of the busbars of Examples 1 to 3 was in the range of 91.2 °C to 94.63 °C, which was 20 °C or lower than the maximum temperature of the busbar of Comparative Example 1 (114.28 °C). In addition, it can be seen that the maximum temperature of the busbars of Examples 1 to 3 was reduced by 10 °C or more, as compared to that of the busbar of Comparative Example 2 including a related art heat dissipation material (heat dissipation silicone) applied thereto.

Temperature changes in a battery cell with a heat dissipation layer and a battery cell without a heat dissipation layer were measured and recorded in Table 2 below. The temperature of each of the battery cells was measured by attaching a thermocouple to the center of a long side thereof. The temperature of a battery cell with the busbar of Example 3 was reduced by 4 °C to 5 °C, as compared to a battery cell with the busbar of Comparative Example 1, which indicates that the heat dissipation layer is also effective at reducing the internal temperature of a battery cell.

**Table 2**

| | Cell temperature at end of discharging | Maximum cell temperature including post-heating |
|---|---|---|
| Example 3 | 66.27 °C | 70.11 °C |
| Comparative Example 1 | 62.44 °C | 65.50 °C |

Consequently, it was confirmed that formation of a heat dissipation layer on a busbar through application of the heat dissipation composition according to the present disclosure may provide an effective response to an increase in temperature of the busbar and can ensure effective cooling of a battery cell, making it possible to construct a more stable (e.g., thermally stable) battery module.

For example, the heat dissipation composition of Example 1, including a flame retardant and a fire extinguishing capsule, is very effective at extinguishing an initial fire caused by overheating of battery cells around a busbar assembly and at preventing successive ignition of the battery cells, by allowing a fire extinguishing agent to spread into the battery cells at a temperature lower than 200 °C, which is the ignition temperature of the battery cells.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure, the claims and their equivalents.

Embodiments are set out in the following clauses:
Clause 1. A heat dissipation composition comprising: a base resin, and a phase change material, wherein a weight ratio of the base resin to the phase change material rangesis from about 2.8:1 to about 1.3:1.
Clause 2. The heat dissipation composition according to Clause 1, further comprising: a fire extinguishing agent and a flame retardant, wherein the heat dissipation composition comprises: about 50 parts by weight to about 70 parts by weight of the base resin; about 20 parts by weight to about 40 parts by weight of the phase change material; about 1 part by weight to about 10 parts by weight of the fire extinguishing agent; and about 1 part by weight to about 10 parts by weight of the flame retardant, each based on 100 parts by weight of the heat dissipation composition.
Clause 3. The heat dissipation composition according to Clause 1 or Clause 2, wherein the phase change material has a phase change temperature of about 35 °C to about 45 °C.
Clause 4. The heat dissipation composition according to any preceding Clause, wherein the base resin forms a matrix and the phase change material is present in the form of microcapsules in the matrix of the base resin.
Clause 5. The heat dissipation composition according to Clause 2, or Clause 3 or Clause 4 when referring to Clause 2, wherein the base resin forms a matrix and the fire extinguishing agent is present in the form of microcapsules in the matrix of the base resin.
Clause 6. The heat dissipation composition according to Clause 2, or any one of Clauses 3 to 5 when referring to Clause 2, wherein the fire extinguishing agent has a reaction temperature of 140 °C to about 180 °C.
Clause 7. The heat dissipation composition according to Clause 2, or any of Clauses 3 to 6 when referring to Clause 2, wherein the fire extinguishing agent comprises a perfluoro group.
Clause 8. The heat dissipation composition according to Clause 2, or any of Clauses 3 to 7 when referring to Clause 2, wherein the flame retardant comprises a phosphorus flame retardant, a non-halogen flame retardant, or a combination thereof.
Clause 9. The heat dissipation composition according to Clause 2, or any of Clauses 3 to 8 when referring to Clause 2, wherein the flame retardant has a flame retardancy of V-2, as measured in accordance with UL94.
Clause 10. A method of using the heat dissipation composition according to any one of Clauses 1 to 9, the method comprising: spraying or applying the heat dissipation composition to an object, wherein the object comprises a busbar, a battery cell, or a combination thereof.
Clause 11. A method of manufacturing a busbar assembly, the method comprising: preparing a heat dissipation composition by mixing a phase change material with a base resin; and applying the heat dissipation composition to an upper surface of a busbar, followed by drying the heat dissipation composition.
Clause 12. The method according to Clause 11, wherein the heat dissipation composition comprises the base resin and the phase change material, and a weight ratio of the base resin to the phase change material is from about 2.8:1 to about 1.3:1.
Clause 13. The method according to Clause 12, wherein the heat dissipation composition further comprises a fire extinguishing agent and a flame retardant, wherein the heat dissipation composition comprises: about 50 parts by weight to about 70 parts by weight of the base resin, about 20 parts by weight to about 40 parts by weight of the phase change material, about 1 part by weight to about 10 parts by weight of the fire extinguishing agent, and about 1 part by weight to about 10 parts by weight of the flame retardant.
Clause 14. The method according to any one of Clauses 11 to 13, wherein a fire extinguishing sheet is attached to a region on an upper surface of the busbar, and the heat dissipation composition is applied to the region on the upper surface of the busbar.
Clause 15. The method according to any one of Clauses 11 to 14, wherein the busbar is free from a heat sink.
Clause 16. The method according to any one of Clauses 11 to 15, wherein a thickness of the heat dissipation composition on the surface of the busbar is about 16 mm or more.
Clause 17. The method according to Clause 16, wherein a maximum temperature of the busbar upon heat generation is reduced by about 20 °C or more, as compared with when the heat dissipation composition is not applied to the busbar.
Clause 18. The method according to any one of Clauses 11 to 17, wherein the heat dissipation composition has a latent heat value of about 40 kJ/kg or more.
Clause 19. The method according to any one of Clauses 11 to 18, wherein the fire extinguishing agent has a reaction temperature of about 140 °C to about 180 °C.
Clause 20. An energy storage device comprising: a plurality of battery cells; a busbar connected to an electrode lead of at least one battery cell of the plurality of battery cells; and a heat dissipation layer on an upper surface of the busbar, the heat dissipation layer being formed by applying the heat dissipation composition according to any one of Clauses 1 to 9 to the busbar.

**List of reference numerals**

| | | | |
|---|---|---|---|
| 1: | Grid region | 2: | Fire Extinguishing Sheet |
| 11: | Positive electrode | 12: | Negative electrode |
| 13: | Separator | 20: | Case |
| 30: | Cap assembly | 31: | Cap plate |
| 32: | Electrolyte inlet | 33: | Sealing plug |
| 34: | Vent | 40: | First current collector |
| 50: | Second current collector | 200: | Battery Cell |
| 300: | Busbar | | |
| 400: | Heat dissipation layer | | |

## Claims

1. A heat dissipation composition comprising:
a base resin, and
a phase change material,
wherein a weight ratio of the base resin to the phase change material is from about 2.8:1 to about 1.3:1.

2. The heat dissipation composition according to claim 1, further comprising a fire extinguishing agent and a flame retardant,
wherein the heat dissipation composition comprises:
about 50 parts by weight to about 70 parts by weight of the base resin;
about 20 parts by weight to about 40 parts by weight of the phase change material;
about 1 part by weight to about 10 parts by weight of the fire extinguishing agent; and
about 1 part by weight to about 10 parts by weight of the flame retardant,
each based on 100 parts by weight of the heat dissipation composition.

3. The heat dissipation composition according to claim 1 or claim 2, wherein the phase change material has a phase change temperature of about 35 °C to about 45 °C.

4. The heat dissipation composition according to any preceding claim, wherein the base resin is to form a matrix and the phase change material is to be present in a form of microcapsules in the matrix.

5. The heat dissipation composition according to claim 2, or claim 3 or claim 4 when dependent on claim 2, wherein the base resin is to form a matrix and the fire extinguishing agent is to be present in a form of microcapsules in the matrix of the base resin.

6. The heat dissipation composition according to claim 2, or any one of claims 3 to 5 when dependent on claim 2, wherein the fire extinguishing agent has a reaction temperature of 140 °C to about 180 °C, optionally wherein the first extinguishing agent comprises a perfluoro group.

7. The heat dissipation composition according to claim 2, or any one of claims 3 to 6 when dependent on claim 2, wherein the flame retardant comprises a phosphorus flame retardant, a non-halogen flame retardant, or a combination thereof.

8. A method of manufacturing a busbar assembly, the method comprising:
preparing a heat dissipation composition by mixing a phase change material with a base resin; and
applying the heat dissipation composition to an upper surface of a busbar, followed by drying the heat dissipation composition.

9. The method according to claim 8, wherein the heat dissipation composition comprises the base resin and the phase change material, and a weight ratio of the base resin to the phase change material is from about 2.8:1 to about 1.3:1.

10. The method according to claim 8 or claim 9, wherein the heat dissipation composition further comprises a fire extinguishing agent and a flame retardant,
wherein the heat dissipation composition comprises:
about 50 parts by weight to about 70 parts by weight of the base resin,
about 20 parts by weight to about 40 parts by weight of the phase change material,
about 1 part by weight to about 10 parts by weight of the fire extinguishing agent, and about 1 part by weight to about 10 parts by weight of the flame retardant.

11. The method according to any one of claims 8 to 10, wherein a thickness of the heat dissipation composition on the surface of the busbar is about 16 mm or more.

12. The method according to claim 11, wherein a maximum temperature of the busbar upon heat generation is reduced by about 20 °C or more, as compared with a same busbar except for not having the heat dissipation composition.

13. The method according to any one of claims 8 to 12, wherein the heat dissipation composition has a latent heat value of about 40 kJ/kg or more.

14. The method according to any one of claims 8 to 13, wherein the fire extinguishing agent has a reaction temperature of about 140 °C to about 180 °C.

15. An energy storage device comprising:
a plurality of battery cells;
a busbar connected to an electrode lead of at least one battery cell of the plurality of battery cells; and
a heat dissipation layer on an upper surface of the busbar, the heat dissipation layer being formed from the heat dissipation composition according to any one of claims 1 to 7.
